# FASCICULE DE BREVET EUROPEEN

(11) **EP 1 864 581 B1**
(45) Date de publication et mention de la délivrance du brevet: **24.11.2010**
(21) Numéro de dépôt: 07109596.2
(22) Date de dépôt: 05.06.2007
(51) Int. Cl.: A41D 1/00, A41D 13/00, F41H 1/02, G06F 1/16

(54) **Vetement modulaire**
Modulverkleidung
Modular item of clothing

(30) Priorité: 06.06.2006 FR 0605018
(43) Date de publication de la demande: 12.12.2007
(73) Titulaire: SAGEM DEFENSE SECURITE, 75015 Paris (FR)
(72) Inventeur: Rene, Frédéric, 75015 Paris (FR); Brucker, Xavier, 75015 Paris (FR)
(74) Mandataire: Cabinet Plasseraud

(56) Documents cités:
- WO-A-01/95751
- WO-A-97/27442
- WO-A-2004/010806
- US-A- 5 774 338

## Description

La présente invention concerne d'une façon générale le domaine des vêtements spécialisés destinés à certains professionnels.

Dans l'exercice de leurs fonctions, certains professionnels ont besoin d'un matériel électronique et/ou informatique qu'ils doivent porter ainsi que l'alimentation électrique correspondante (batterie d'accumulateurs) notamment de manière à conserver la libre disposition de leurs mains. Il est connu de disposer ces matériels dans des sacs ou sacoches accrochés de façon amovible sur un vêtement en des emplacements prédéterminés de celui-ci, mais aussi de prévoir sur le vêtement des poches multiples propres à réceptionner les divers équipements, ces sacoches et/ou poches étant disposées en divers emplacements du vêtement de manière que la charge des matériels soit répartie et ainsi plus facile à porter. On connaît diverses réalisations de vêtements spécialisés agencés dans ce but: voir par exemple les documents US 5 831 198, US 5 265 782, WO 2004/010806; également le document FR 05 05821 au nom de la Demanderesse évoque un tel vêtement. Dans ce qui suit, ce type de vêtement sera, pour simplifier, dénommé vêtement électronique.

Toutefois, un problème posé par ce type de vêtement réside dans l'interconnexion électrique et/ou informatique des matériels répartis en des emplacements divers du vêtement. Dans les vêtements spécialisés connus, ces interconnexions électriques et/ou informatiques des matériels sont adaptées à la configuration exacte du vêtement ; autrement dit par exemple, des vêtements de même type mais conformés pour des tailles différentes reçoivent des interconnexions de longueurs différentes adaptées de façon respective.

Ces professionnels peuvent avoir besoin également, au moins dans certaines circonstances, de porter un vêtement spécialisé tel qu'un vêtement de protection (par exemple protection thermique, protection balistique et/ou contre des armes blanches, etc.) tout en conservant leur vêtement spécialisé de portage du matériel électrique et/ou informatique. Bien que la fonction d'un tel vêtement puisse être autre que la protection, dans ce qui suit ce vêtement sera, pour simplifier, dénommé vêtement de protection. Le port d'un tel vêtement de protection pose un problème important car il s'agit généralement d'un vêtement épais et peu souple, dont le port peut a priori paraître incompatible conjointement avec celui d'un vêtement électronique.

A ces considérations, il faut ajouter que l'utilisateur doit avoir en permanence un accès immédiat au moins à la plupart des matériels électroniques et/ou informatiques qu'il transporte.

Enfin, il faut noter également que, au moins dans certains domaines d'utilisation de tels vêtements (armée, police notamment), il est nécessaire que les deux vêtements de protection et surtout électronique qui est pesant soient parfaitement ajustés sur l'utilisateur de manière que celui-ci puisse courir ou faire des mouvements brusques (se plaquer au sol, se relever, ...) sans que les matériels brinquebalent et éventuellement deviennent bruyants.

C'est dans ce contexte que l'invention propose un agencement perfectionné de vêtement modulaire propre à répondre aux diverses attentes précitées des professionnels.

A ces fins, un vêtement modulaire agencé conformément à l'invention comprend:
- un premier vêtement ou vêtement de protection, épais et peu souple, de port optionnel, et
- un second vêtement ou vêtement électronique constitué de trois parties solidaires les unes des autres, à savoir une partie centrale située dans le dos et relativement souple et deux parties latérales se raccordant sur le devant de façon relâchable, ce vêtement électronique étant propre soit à être porté seul, soit à être porté par-dessus le premier vêtement,
- des moyens de réglage fonctionnellement associés à la partie centrale et propres à en modifier la largeur pour la rendre étroite lorsque le vêtement électronique est porté seul ou la rendre large lorsque le vêtement électronique est porté par-dessus le premier vêtement,
- au moins deux dispositifs électriques et/ou électroniques supportés respectivement par les parties latérales du vêtement électronique, et
- au moins un câble électrique s'étendant sur la face intérieure du vêtement électronique entre au moins les deux dispositifs électriques, ledit câble étant fixé sur les parties latérales du vêtement électronique et n'étant pas fixé à la partie centrale du vêtement électronique devant laquelle il s'étend librement selon un parcours incurvé de manière à être propre à accompagner les modifications de largeur de ladite partie centrale en fonction des conditions de port dudit vêtement électronique.

Le vêtement modulaire agencé selon l'invention satisfait simultanément à toutes les exigences de la pratique. En effet, la capacité de réglage en largeur conférée à la partie centrale permet d'adapter le vêtement électronique à un port direct ou à un port par-dessus le vêtement de protection ; les deux fonctions de protection et portage des matériels peuvent ainsi être séparées et le vêtement de protection peut n'être endossé que lorsque cela est nécessaire, ce qui améliore le confort de l'utilisateur surtout dans des ambiances à température et/ou taux d'humidité élevés. De plus, du fait même de cette capacité de réglage, dans les deux configurations le vêtement électronique peut être ajusté pour épouser étroitement le torse de l'utilisateur de sorte que les matériels sont correctement maintenus et ne peuvent pas brinquebaler et devenir bruyants. Le fait que le vêtement électronique soit porté par-dessus le vêtement de protection lorsque celui-ci est requis laisse un accès direct et immédiat aux matériels électroniques et/ou informatiques conformément aux exigences des utilisateurs.

De préférence, deux moyens de fixation du câble respectivement aux parties latérales du vêtement sont prévus au moins approximativement au niveau des jonctions respectives entre la partie centrale et les parties latérales du vêtement, de telle sorte que le câble est maintenu de façon aussi rapprochée que possible de part et d'autre de la partie centrale tout en s'étendant librement devant cette dernière.

En pratique, il sera courant que plusieurs câbles soient prévus pour assurer toutes les interconnexions nécessaires et au moins les deux moyens de fixation sont alors conformés pour maintenir les câbles juxtaposés en un faisceau plat au moins en regard de la partie centrale du vêtement, de façon à empêcher les câbles de se chevaucher et à gêner l'utilisateur. Les moyens de fixation pourront être de toute conception appropriée et par exemple il pourra s'agir de pinces plates adaptées au câble de plus gros diamètre ; un tel agencement offre de plus l'avantage que les câbles de diamètres moindres peuvent avoir des déplacements axiaux relatifs et donc éviter une rigidification trop importante du vêtement. Toutefois, il est avantageux de prévoir des moyens de butée sur les câbles de part et d'autre des moyens respectifs de fixation de manière à limiter l'amplitude des déplacements axiaux relatifs des câbles. De plus, il est souhaitable qu'entre les deux susdits moyens de fixation du câble, en regard de la partie centrale du vêtement, soit prévu au moins un organe d'assemblage libre, non fixé au vêtement, propre à contribuer au maintien des câbles juxtaposés en un faisceau plat.

Pour assurer au mieux la capacité de déformation de la partie centrale du vêtement en relation avec sa largeur ajustable malgré la présence du câble ou plus généralement du faisceau de câbles d'interconnexion, il est souhaitable qu'en regard de ladite partie centrale du vêtement le ou chaque câble soit incurvé en S ou en Q.

Pour faciliter l'utilisation du vêtement électronique et éviter que les câbles ne soient accrochés notamment lorsque ce vêtement est enfilé, il est souhaitable que la partie centrale du vêtement comporte une doublure souple (par exemple sous forme d'un tissu en treillis) recouvrant le ou les câbles.

Un vêtement modulaire agencé conformément à l'invention est propre à répondre aux attentes de divers professionnels devant exploiter des matériels électroniques et/ou informatiques portés dans des conditions difficiles, cas par exemple de la prise de vue avec caméra numérique (les mémoires, les batteries, les matériels de prise de son étant logés dans le vêtement électronique) dans une ambiance thermique extrême soit froide (vêtement de protection contre le froid), soit chaude et/ou humide (vêtement de protection contre la chaleur, avec éventuellement réfrigération intégrée). Toutefois, une application tout particulièrement envisagée pour le vêtement modulaire de l'invention concerne l'équipement de forces armées, notamment militaires ou policières, le vêtement de protection étant alors un gilet balistique (protection contre les armes de poing et/ou les armes blanches).

L'invention sera mieux comprise à la lecture de la description détaillée qui suit de certains modes de réalisation préférés donnés uniquement à titre d'exemples nullement limitatifs. Dans cette description, on se réfère aux dessins annexés sur lesquels :
- la figure 1 est une vue de devant d'un exemple de vêtement de protection de port optionnel et destiné à être porté en premier vêtement ;
- les figures 2A et 2B sont des vues très schématiques, respectivement recto et verso, d'un vêtement électronique agencé conformément à l'invention et disposé dans une première conformation fonctionnelle ;
- la figure 3 est une vue de derrière montrant le vêtement électronique disposé dans la première conformation fonctionnelle et porté par-dessus le vêtement de protection ;
- la figure 4 est une vue de derrière montrant le vêtement électronique dans une seconde conformation fonctionnelle et porté seul ;
- la figure 5 est une vue très schématique montrant le verso du vêtement électronique dans sa conformation fonctionnelle de la figure 4 ; et
- la figure 6 est une vue de trois quart arrière d'une variante de réalisation du vêtement électronique agencé conformément à l'invention.

Dans la description qui suit, l'invention sera plus spécifiquement décrite dans son application à un équipement de forces armées (militaires policiers) qui constitue une application préférée même si elle n'est pas exclusive.

Pour parvenir aux buts fixés exposés plus haut, l'invention propose un vêtement modulaire comprenant un premier vêtement ou vêtement de protection, ci-après désigné dans son ensemble par la référence numérique 1, et un second vêtement ou vêtement électronique, ci-après désigné dans son ensemble par la référence numérique 2.

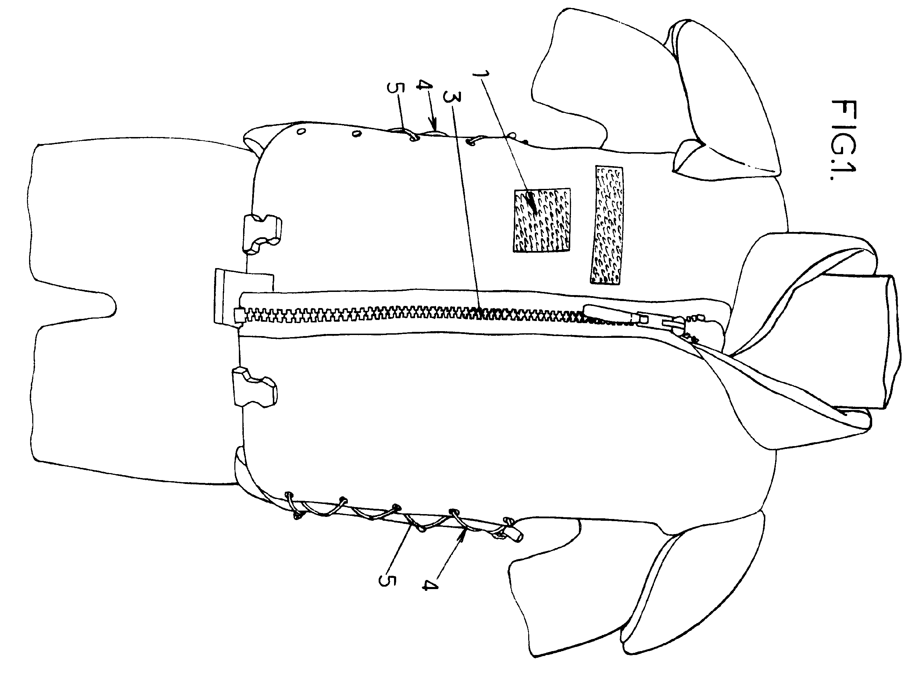

En se reportant tout d'abord à la figure 1, il y est représenté un exemple d'un premier vêtement ou vêtement de protection désigné dans son ensemble par la référence 1 (il s'agit ici d'un gilet balistique de protection contre les armes de poing et les armes blanches, mais qui dans d'autres applications pourrait être par exemple un vêtement de protection thermique contre le froid ou contre la chaleur). Un tel vêtement est épais et peu souple ; dans le cas du gilet balistique, il tient chaud, ce qui est une gêne notable dans les ambiances à température élevée. Un tel vêtement n'est donc pas de port permanent et il n'est revêtu que lorsque cela est nécessaire ; dans ce cas, il est porté en tant que premier vêtement ou vêtement de dessous.

Dans l'exemple illustré le vêtement de protection 1 peut se présenter sous forme d'un gilet sans manches, à ouverture/fermeture 3 située sur le devant. Mais ce vêtement de protection peut avoir toute conformation et toute constitution appropriée en relation avec sa fonction, ces conformation et constitution n'entrant pas directement dans le champ de l'invention. Il est simplement intéressant de noter que le vêtement de protection 1 est pourvu de moyens 4 de réglage, par exemple sous forme d'un ou plusieurs lacets 5 qui peuvent être disposés sur le côté, qui permettent d'ajuster étroitement le vêtement sur le buste de l'utilisateur de manière que ce vêtement ne « flotte » pas.

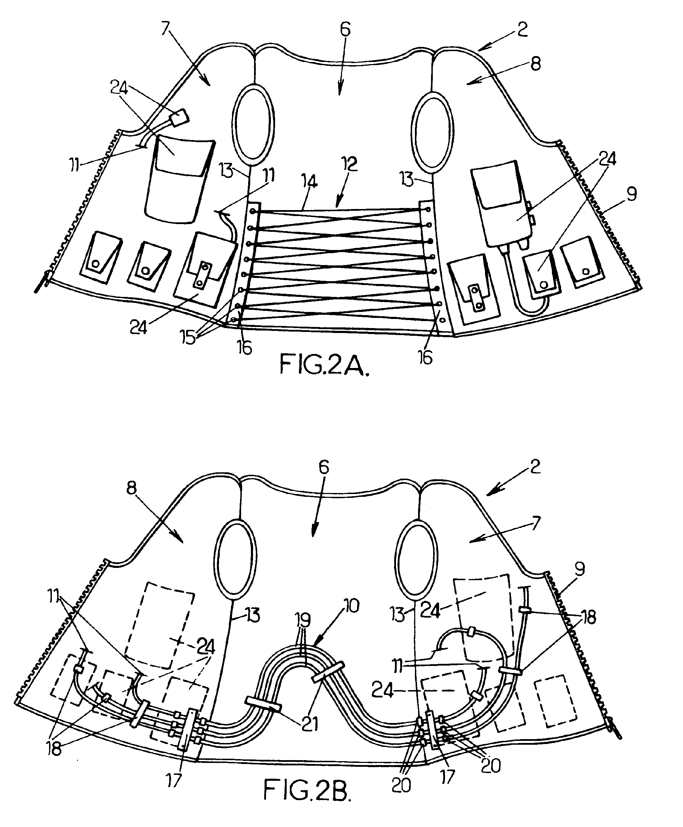

En se reportant maintenant aux figures 2A et 2B, il y est représenté de façon très schématique un exemple d'un second vêtement ou vêtement électronique 2 agencé conformément à l'invention. Ce vêtement se présente sous la forme générale d'un gilet, c'est-à-dire un vêtement sans manches, propre à être endossé par-dessus un habillement dans des conditions qui seront exposées plus loin. Sur les figures 2A et 2B, le vêtement 2 est représenté respectivement recto (face extérieure visible) et verso (face intérieure visible).

Le vêtement 2 est constitué essentiellement en trois parties solidaires les unes des autres, à savoir une partie 6 centrale située dans le dos et relativement souple et deux parties 7, 8 latérales se raccordant sur le devant de façon relâchable (par exemple fermeture à glissière 9).

Les seules parties 7, 8 latérales sont agencées pour supporter des matériels 24 électroniques et/ou informatiques nécessaires à l'utilisateur, ces matériels électroniques et/ou informatiques étant multiples d'une part en raison de leurs fonctions, et d'autre part de manière à pouvoir être disposés en de multiples emplacements afin que la charge soit répartie et plus facile à porter. Ces matériels sont ceux nécessaires à l'utilisateur pour l'exercice de sa fonction. Pour l'équipement d'un militaire par exemple, il peut s'agir d'une centrale informatique de traitement de données qui centralise les informations, un appareil émetteur-récepteur pour l'échange d'informations à distance, d'un appareil de navigation, d'un dispositif de conduite de tir, de connecteurs pour le raccordement d'appareils de tête (microphone et écouteurs, dispositif de vision nocturne) et pour le raccordement d'une arme à visée électronique, etc ; à ceci s'ajoute bien entendu une source électrique autonome (batteries).

Pour pouvoir supporter de telles charges, les parties 7, 8 latérales du vêtement sont renforcées et de ce fait peuvent ne pas présenter une très grande souplesse.

Par contre, la partie 6 centrale ne supporte aucun matériel et de ce fait elle peut être d'une grande souplesse, ce qui sera mis à profit conformément à l'invention comme cela sera exposé plus loin.

Le vêtement 2 peut être constitué en tout matériau souhaité, de préférence en tissu, ce tissu pouvant éventuellement être différent pour la partie 6 centrale et les parties 7, 8 latérales. En pratique, le vêtement 2, n'ayant pas à assurer d'autres fonctions notamment de protection, peut, et de préférence doit, être agencé de manière à n'apporter qu'un minimum de gêne à l'utilisateur. Il peut donc avantageusement être constitué intégralement en un tissu maillé, résistant mécaniquement mais aéré, les parties 7, 8 latérales pouvant être renforcées mécaniquement en tout ou partie par des renforts (métalliques ou matières plastiques) pour le support des matériels.

Comme représenté sur les figures 2A et 2B, les matériels sont logés dans des poches appartenant au vêtement 2 et/ou dans des sacoches rapportées, notamment de manière amovible, sur le vêtement 2.

Pour assurer les interconnexions fonctionnelles électroniques et informatiques entre les divers matériels, un câblage est prévu et, pour ne pas gêner l'utilisateur, ce câblage 10 est fixé sur la face intérieure du vêtement 2 comme montré à la figure 2B, les extrémités du ou des câbles atteignant les matériels respectifs à travers des boutonnières 11 pratiquées dans le vêtement.

Pour que l'utilisateur soit en mesure d'assurer sa fonction, il est tenu de porter le vêtement 2 électronique. Par contre, comme indiqué plus haut, le port du vêtement 1 de protection, qui est plus contraignant, reste optionnel et réservé aux nécessités.

Par ailleurs, le vêtement 2 électronique doit être ajusté sur le buste de l'utilisateur de manière que les matériels ne subissent pas de chocs intempestifs, de manière à éviter les bruits d'entrechoquement, et de manière à éviter que le vêtement s'accroche.

En outre, il est nécessaire que l'utilisateur conserve en permanence un accès rapide aux matériels qu'il porte.

Pour ces diverses raisons, il est indispensable que le vêtement 2 électronique soit extérieur de façon permanente, quel que soit par ailleurs l'équipement de l'utilisateur. Autrement dit, lorsque l'utilisateur est équipé de son vêtement 1 de protection, le vêtement 2 électronique doit être porté par-dessus celui-ci, tandis que le vêtement 2 électronique peut être porté seul, avec dans les deux cas la nécessité que le vêtement 2 électronique soit parfaitement ajusté sur le buste de l'utilisateur malgré la présence éventuelle de la surépaisseur notable apportée par le vêtement 1 de protection lorsque celui-ci est présent.

Dans ces conditions, il est prévu que le vêtement 2 électronique soit de largeur réglable, en mettant à profit pour cela la souplesse de la partie 6 centrale du vêtement 2 électronique. A cet effet, il est prévu d'équiper le vêtement 2 électronique, notamment à l'extérieur de celui-ci comme montré à la figure 2A, de moyens 12 de réglage en largeur. Ces moyens 12 de réglage en largeur sont associés respectivement aux deux bords de la partie 6 centrale par lesquels elle se raccorde aux parties 7, 8 latérales respectives ; dans l'exemple illustré ils sont associés aux assemblages 13 reliant la partie centrale aux parties latérales du vêtement.

Ces moyens de réglage peuvent être quelconques pourvus qu'ils soient propres à autoriser le réglage souhaité de la largeur de la partie 6 centrale du vêtement électronique.

A titre d'exemple, à la figure 2A on a représenté lesdits moyens 12 de réglage comme comprenant au moins un lacet 14 passant en zigzags dans des oeillets 15 portés par deux bandes 16 de toile solidaires des susdits assemblages 13 de la partie 6 centrale aux parties latérales 7, 8 du vêtement électronique. Le réglage de largeur est alors obtenu par serrage ou relâchement du lacet 14.

Toutefois, le câblage 10 présent au revers intérieur du vêtement électronique doit, tout en étant fixé au vêtement, pouvoir accompagner les variations dimensionnelles de la largeur de la partie 6 centrale. A cette fin, on prévoit comme illustré à la figure 2B que le câblage 10 soit fixé uniquement sur les parties 7, 8 latérales du vêtement électronique et ne soit pas fixé à la partie 6 centrale devant laquelle il s'étend librement selon un parcours incurvé, typiquement en S ou en Ω de manière à être propre à accompagner les modifications de largeur de ladite partie 6 centrale. Cette forme en S ou en Ω est obtenue en donnant au tronçon de câblage s'étendant en regard de la partie 6 centrale du vêtement 2 une longueur sensiblement supérieure à la largeur de ladite partie 6 centrale du vêtement 2.

On prévoit deux organes 17 (par exemple sous forme de pinces) pour la fixation du câblage 10 respectivement aux parties 7, 8 latérales du vêtement, ces organes 17 étant disposés au moins approximativement au niveau des assemblages 13 respectifs entre la partie centrale et les parties latérales du vêtement ou au voisinage immédiat de ceux-ci. De plus, selon leur longueur, les divers câbles sont fixés le long de leurs parcours respectifs aux parties 7, 8 latérales du vêtement par des attaches 18 soit individuelles, soit communes à plusieurs câbles juxtaposés. Eventuellement, les organes 17 de fixation, ainsi que les attaches 18 si nécessaire, peuvent être constitués sous forme de pattes en tissu refermées sur elles-mêmes pour constituer des passants.

On comprendra qu'en pratique, eu égard au nombre de matériels interconnectés supportés par le vêtement 2 électronique en des emplacements dispersés de celui-ci, le câblage comprend plusieurs câbles 19 s'étendant entre les parties 7, 8 latérales. Pour éviter une surépaisseur, propre à gêner l'utilisateur, si plusieurs câbles 19 se chevauchent dans son dos, au moins les deux organes 17 de fixation précités sont conformés pour maintenir les câbles 19 juxtaposés en un faisceau 10 plat au moins en regard de la partie 6 centrale du vêtement 2 électronique. C'est pour cette raison que les organes 17 de fixation sont de préférence constitués en tant que pinces plates adaptées au câble de plus gros diamètre. De la sorte, on obtient en outre l'avantage supplémentaire que les câbles de diamètres moindres peuvent avoir des déplacements axiaux relatifs, ce qui accroît la flexibilité du faisceau de câbles.

De façon avantageuse, des moyens de butée, par exemple sous forme de surépaisseurs 20 (il peut notamment s'agir de bagues clipsées sur le câble), sont prévus sur les câbles 19 de part et d'autre des organes 17 respectifs de fixation de manière à limiter l'amplitude des déplacements axiaux relatifs des câbles et à maintenir la cohésion du faisceau de câbles en forme de S ou de Ω en regard de la partie 6 centrale du vêtement.

Toujours dans le but de maintenir le câblage sous forme d'un faisceau plat sur toute sa longueur en regard de la partie 6 centrale du vêtement 2, on prévoit avantageusement un ou plusieurs organes 21 d'assemblage libres, non fixés au vêtement 2, de manière que le faisceau de câble maintenu plat conserve toute sa capacité de déformation. Les organes 21 d'assemblage peuvent être également des pinces qui peuvent se présenter sous la même conformation que les organes 17 de fixation précités, à la différence près qu'ils ne sont pas fixés.

Pour protéger le câblage 10 et notamment éviter qu'il soit accroché et éventuellement arraché par exemple lorsque l'utilisateur enfile ou quitte le vêtement 2 électronique, il est préférable de prévoir une doublure souple recouvrant intérieurement au moins la partie 6 centrale, et éventuellement également les parties 7, 8 latérales du vêtement 2.

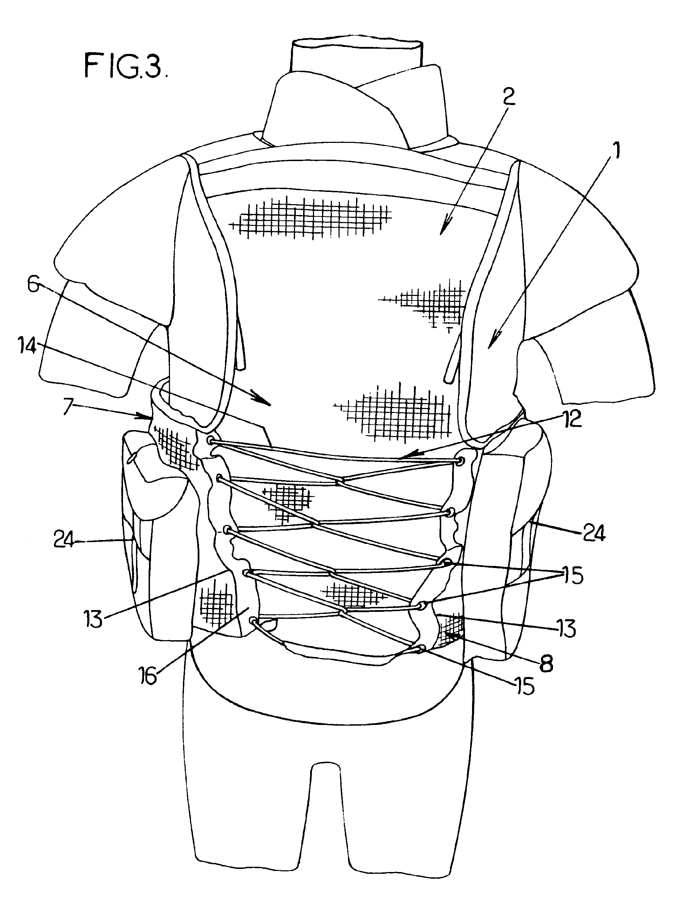

Tel qu'il est représenté aux figures 2A et 2B, le lacet 14 est détendu et le câblage 10 est étiré ; le vêtement 2 électronique présente alors une grande largeur, de sorte qu'il peut être endossé par-dessus le vêtement 1 de protection comme illustré, en vue de dos, à la figure 3.

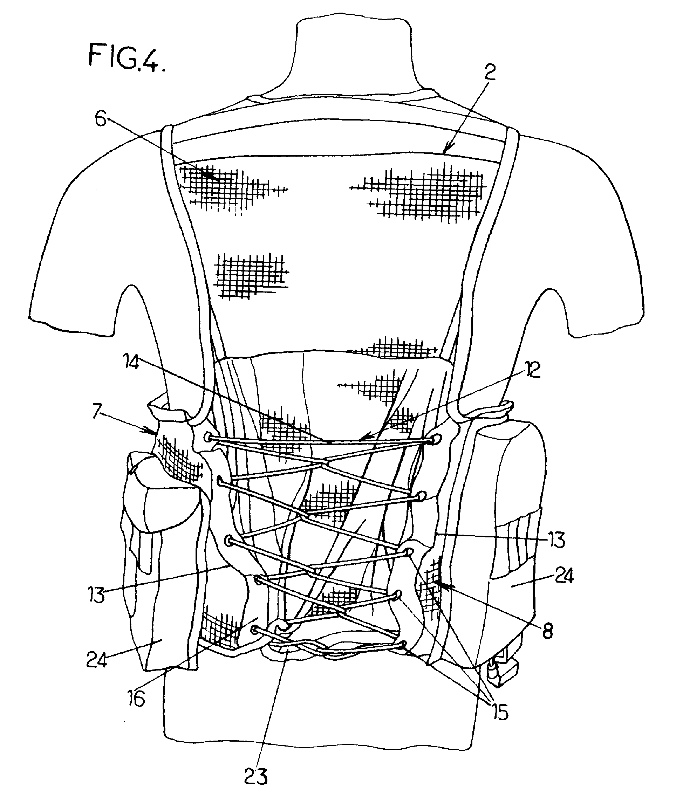

A la figure 4 est montré, également en vue de dos, le même vêtement 2 électronique qui est ici porté seul. Pour son ajustement sur le buste de l'utilisateur, le lacet 14 a été serré, de sorte que les assemblages 13 de la partie 6 centrale avec respectivement les deux parties 7, 8 latérales ont été rapprochés l'un de l'autre et le tissu de la partie inférieure de la partie 6 centrale s'est plissé (en 23).

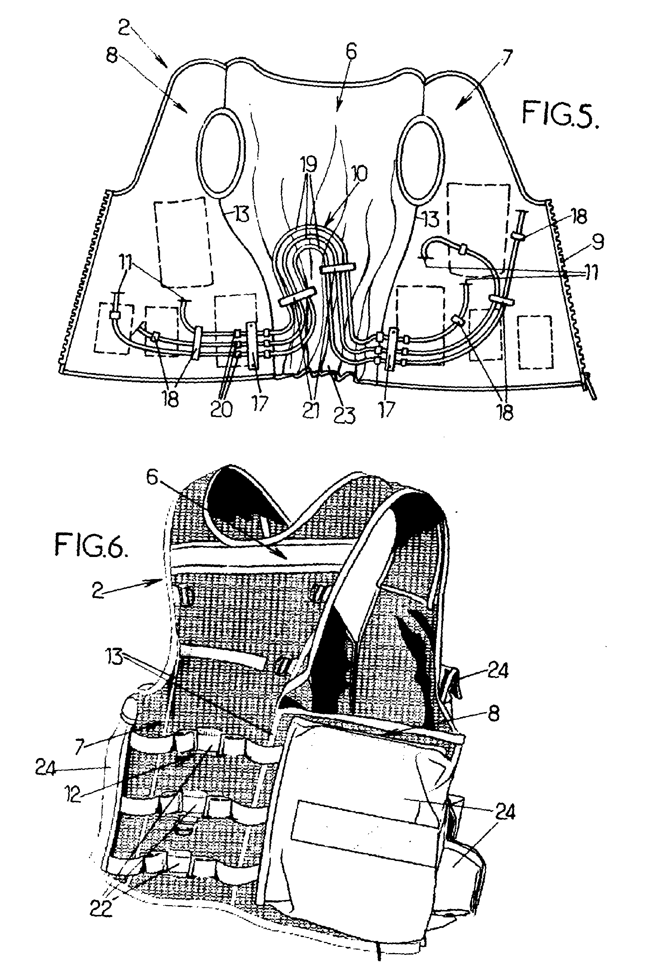

Dans cette disposition, comme représenté schématiquement à la figure 5 montrant la face verso du vêtement 2, le câblage 10, entre les organes 17 de fixation en regard de la partie 6 centrale du vêtement 2, s'est incurvé sur lui-même sans difficulté de par la forme en S ou en Ω qui lui a été imposée.

A la figure 6 est illustrée, en vue de trois quarts arrière, une variante de réalisation concrète d'un vêtement 2 électronique, dans lequel les moyens 12 de réglage sont constitués sous forme de plusieurs sangles 22 disposées les unes au-dessus des autres, chaque sangle 22 étant pourvue d'une boucle permettant d'en modifier la longueur.

Comme cela ressort clairement des explications qui précèdent, la mise en oeuvre pratique des dispositions de l'invention peut donner lieu à de nombreuses variantes, notamment en fonction des applications prévues pour ce vêtement modulaire, des matériels disponibles, etc.

## Revendications

1. Vêtement (1, 2) modulaire comprenant :
- un premier vêtement ou vêtement (1) de protection, épais et peu souple, de port optionnel, et
- un second vêtement ou vêtement (2) électronique constitué de trois parties solidaires les unes des autres, à savoir une partie (6) centrale située dans le dos et relativement souple et deux parties (7, 8) latérales se raccordant (9) sur le devant de façon relâchable, ce vêtement (2) électronique étant propre soit à être porté seul, soit à être porté par-dessus le premier vêtement (1),
- des moyens (12) de réglage fonctionnellement associés à la partie (6) centrale et propres à en modifier la largeur pour la rendre étroite lorsque le vêtement (2) électronique est porté seul ou la rendre large lorsque le vêtement (2) électronique est porté par-dessus le premier vêtement (1),
- au moins deux dispositifs (24) électriques et/ou électroniques supportés respectivement par les parties (7, 8) latérales du vêtement (2) électronique, et
- au moins un câble (19) électrique s'étendant sur la face intérieure du vêtement (2) électronique entre au moins les deux dispositifs (24) électriques, ledit câble (19) étant fixé sur les parties (7, 8) latérales du vêtement électronique et n'étant pas fixé à la partie (6) centrale du vêtement électronique devant laquelle il s'étend librement selon un parcours incurvé de manière à être propre à accompagner les modifications de largeur de ladite partie (6) centrale en fonction des conditions de port dudit vêtement électronique.

2. Vêtement selon la revendication 1, **caractérisé en ce que** deux moyens (17) de fixation du câble respectivement aux parties (7, 8) latérales du vêtement sont prévus au moins approximativement au niveau des jonctions (13) respectives entre la partie (6) centrale et les parties (7, 8) latérales du vêtement.

3. Vêtement selon la revendication 2, **caractérisé en ce que** plusieurs câbles (19) sont prévus et **en ce qu'**au moins les deux moyens (17) de fixation sont conformés pour maintenir les câbles (19) juxtaposés en un faisceau (10) plat au moins en regard de la partie (6) centrale du vêtement électronique.

4. Vêtement selon la revendication 3, **caractérisé en ce que** les moyens (17) de fixation sont des pinces plates adaptées au câble (19) de plus gros diamètre, ce grâce à quoi les câbles de diamètres moindres peuvent avoir des déplacements axiaux relatifs.

5. Vêtement selon l'une quelconque des revendications 2 à 4, **caractérisé en ce que** des moyens (20) de butée sont prévus sur les câbles (19) de part et d'autre des moyens (17) respectifs de fixation de manière à limiter l'amplitude des déplacements axiaux relatifs des câbles (19).

6. Vêtement selon l'une quelconque des revendications 2 à 5, **caractérisé en ce qu'**entre les deux susdits moyens (17) de fixation du câble (19), en regard de la partie (6) centrale du vêtement, est prévu au moins un organe (21) d'assemblage libre, non fixé au vêtement, propre à maintenir les câbles (19) juxtaposés en un faisceau (10) plat.

7. Vêtement selon l'une quelconque des revendications 1 à 6, **caractérisé en ce qu'**en regard de la partie (6) centrale du vêtement le ou chaque câble (19) est incurvé en S ou en Ω.

8. Vêtement selon l'une quelconque des revendications 1 à 7, **caractérisé en ce que** la partie (6) centrale du vêtement comporte une doublure souple recouvrant le ou les câbles (19).

9. Vêtement selon l'une quelconque des revendications 1 à 8, **caractérisé en ce que** le premier vêtement (1) est un gilet balistique.

## Claims

1. A modular garment (1, 2) comprising:
- a thick and relatively inflexible first garment or protective garment (1), intended for optional wear, and
- a second garment or electronic garment (2) consisting of three parts joined together, namely a relatively flexible central part (6) at the back and two side parts (7, 8) that join (9) releasably at the front, said electronic garment (2) being suitable for wearing either on its own or over said first garment (1),
- adjustment means (12) operationally connected to said central part (6) and suitable for modifying the width thereof so as to make it narrow when said electronic garment (2) is worn on its own, or wide when said electronic garment (2) is worn over said first garment (1),
- at least two electrical and/or electronic devices (24) supported respectively on said side parts (7, 8) of said electronic garment (2), and
- at least one electrical cable (19) running across the inside face of said electronic garment (2) between at least said two electrical devices (24), said cable (19) being attached to said side parts (7, 8) of said electronic garment and not being attached to said central part (6) of said electronic garment in front of which it runs freely along a curved path enabling it to adapt to changes in the width of said central part (6) arising from the different ways in which said electronic garment can be worn.

2. The garment according to Claim 1, **characterized in that** two means (17) of attaching the cable respectively to said two side parts (7, 8) of the garment are located at least approximately at respective joins (13) between said central part (6) and said side parts (7, 8) of said garment.

3. The garment according to Claim 2, **characterized in that** several cables (19) are provided and **in that** at least said two attachment means (17) are shaped to hold cables (19) side by side in a flat harness (10) at least in front of said central part (6) of said electronic garment.

4. The garment according to Claim 3, **characterized in that** said attachment means (17) are flat clamps suitable for the largest-diameter cable (19), thus allowing axial relative movements by the smaller-diameter cables.

5. The garment according to any one of Claims 2 to 4, **characterized in that** stop means (20) are provided on said cables (19) on either side of said respective attachment means (17) in such a way as to limit the amplitude of axial relative movements of said cables (19).

6. The garment according to any one of Claims 2 to 5, **characterized in that**, between said two cable (19) attachment means (17), in front of said central part (6) of said garment, at least one unattached assembly member (21), not attached to the garment, is provided to keep said cables (19) side by side in a flat harness (10).

7. The garment according to any one of Claims 1 to 6, **characterized in that** the or each cable (19) is curved into an S or Ω shape in front of said central part (6) of said garment.

8. The garment according to any one of Claims 1 to 7, **characterized in that** said central part (6) of said garment comprises a flexible lining covering said cable or cables (19).

9. Garment according to any one of Claims 1 to 8, **characterized in that** said first garment (1) is a ballistics vest.

## Patentansprüche

1. Modulares Kleidungsstück (1, 2) mit:
- einem ersten Kleidungsstück oder Schutzkleidungsstück (1), das dick und wenig nachgiebig ist und optional getragen wird, und
- einem zweiten Kleidungsstück oder elektronischen Kleidungsstück (2), das aus drei fest miteinander verbundenen Teilen gebildet ist, nämlich aus einem mittleren Teil (6), das sich am Rücken befindet und verhältnismäßig nachgiebig ist, und zwei seitlichen Teilen (7, 8), die an der Vorderseite (9) lockerbar verbunden sind, wobei dieses elektronische Kleidungsstück (2) entweder einzeln oder über dem ersten Kleidungsstück (1) getragen werden kann,
- Einstellmitteln (12), die dem mittleren Teil (6) funktional zugeordnet sind und dessen Weite modifizieren können, um ihn eng zu machen, wenn das elektronische Kleidungsstück (2) allein getragen wird, oder um ihn weit zu machen, wenn das elektronische Kleidungsstück (2) über dem ersten Kleidungsstück (1) getragen wird,
- wenigstens zwei elektrischen und/oder elektronischen Vorrichtungen (24), die von den seitlichen Teilen (7, 8) des elektronischen Kleidungsstücks (2) gehalten werden, und
- wenigstens einem elektrischen Kabel (19), das auf der inneren Fläche des elektronischen Kleidungsstücks (2) zwischen wenigstens den zwei elektrischen Vorrichtungen (24) verläuft, wobei das Kabel (19) an den seitlichen Teilen (7, 8) des elektronischen Kleidungsstücks befestigt ist und an dem mittleren Teil (6) des elektronischen Kleidungsstücks nicht befestigt ist, vor dem es frei längs eines gekrümmten Wegs in der Weise verläuft, dass es die Veränderungen der Weite des mittleren Teils (6) in Abhängigkeit von den Zuständen des Tragens des elektronischen Kleidungsstücks begleiten kann.

2. Kleidungsstück nach Anspruch 1, **dadurch gekennzeichnet, dass** wenigstens ungefähr auf Höhe der jeweiligen Verbindungen (13) zwischen dem mittleren Teil (6) und den seitlichen Teilen (7, 8) des Kleidungsstücks zwei Befestigungsmittel (17) zur Befestigung des Kabels jeweils an den zwei seitlichen Teilen (7, 8) des Kleidungsstücks vorgesehen sind.

3. Kleidungsstück nach Anspruch 2, **dadurch gekennzeichnet, dass** mehrere Kabel (19) vorgesehen sind und dass wenigstens die zwei Befestigungsmittel (17) dazu ausgelegt sind, die Kabel (19) wenigstens gegenüber dem mittleren Teil (6) des elektronischen Kleidungsstücks nebeneinander als flaches Bündel (10) zu halten.

4. Kleidungsstück nach Anspruch 3, **dadurch gekennzeichnet, dass** die Befestigungsmittel (17) Flachklemmen sind, die an das Kabel (19) mit größerem Durchmesser angepasst sind, weshalb die Kabel mit kleineren Durchmessern relative axiale Verlagerungen ausführen können.

5. Kleidungsstück nach einem der Ansprüche 2 bis 4, **dadurch gekennzeichnet, dass** Anschlagmittel (20) an den Kabeln (19) beiderseits der jeweiligen Befestigungsmittel (17) in der Weise vorgesehen sind, dass die Amplitude der relativen axialen Verlagerungen der Kabel (19) begrenzt ist.

6. Kleidungsstück nach einem der Ansprüche 2 bis 5, **dadurch gekennzeichnet, dass** zwischen den zwei oben genannten Mitteln (17) für die Befestigung des Kabels (19) gegenüber dem mittleren Teil (6) des Kleidungsstücks wenigstens ein Organ (21) zur freien Montage vorgesehen ist, das nicht am Kleidungsstück befestigt ist und die Kabel (19) nebeneinander als Flachkabel (10) halten kann.

7. Kleidungsstück nach einem der Ansprüche 1 bis 6, **dadurch gekennzeichnet, dass** gegenüber dem mittleren Teil (6) des Kleidungsstücks das oder jedes Kabel (19) S-förmig oder Ω-förmig gebogen ist.

8. Kleidungsstück nach einem der Ansprüche 1 bis 7, **dadurch gekennzeichnet, dass** der mittlere Teil (6) des Kleidungsstücks eine nachgiebige Aufdoppelung aufweist, die das oder die Kabel (19) abdeckt.

9. Kleidungsstück nach einem der Ansprüche 1 bis 8, **dadurch gekennzeichnet, dass** das erste Kleidungsstück (1) eine ballistische Weste ist.
